# EUROPEAN PATENT APPLICATION

(11) **EP 4 245 438 A1**
(43) Date of publication of application: **20.09.2023**
(21) Application number: 21890923.2
(22) Date of filing: 21.10.2021
(51) Int. Cl.: B22F 3/105, B23K 26/70, B33Y 10/00, B33Y 80/00, B23K 26/342

(54) **FORMED PART HAVING INCLINED SURFACE AND FORMING METHOD THEREFOR**

(30) Priority: 11.11.2020 CN 202011251938
(71) Applicant: AECC Shanghai Commercial Aircraft Engine Manufacturing Co., Ltd., Shanghai 201306 (CN); Aecc Commercial Aircraft Engine Co., Ltd., Shanghai 200241 (CN)
(72) Inventor: FU, Jun, Shanghai 200241 (CN); LEI, Liming, Shanghai 200241 (CN); ZHOU, Xinmin, Shanghai 200241 (CN); FU, Xin, Shanghai 200241 (CN); YAN, Xue, Shanghai 200241 (CN)
(74) Representative: IPLodge bv
(86) International application number: PCT/CN2021/125357
(87) International publication number: WO 2022/100396

(57) **Abstract**

The invention provides a method for forming a forming part with an inclined surface and a forming part with an inclined surface, wherein the forming method comprises: obtaining a model of the part to be formed; performing layer separating and slicing process to form a plurality of forming layers (2a); performing scanning path planning on each forming layer (2a); wherein a suspended area (20a) and a non-suspended area (21a) are provided in a plurality of forming layers forming the inclined surface (10), frame scanning path (12) comprises a first path (121) and a second path (122), the first path (121) corresponds to the non-suspended area (121) and the second path (122) corresponds to the suspended area (20a); based on the size of the angle of inclination, setting process parameters for preparation for the first path (121) and the second path (122), and printing layer by layer based on the set process parameters for preparation; wherein an energy density in the process parameters for preparation of the first path (121) is smaller than an energy density in the process parameters for preparation of the second path (122). The forming method can ensure the angle of inclination of the inclined surface to form effectively.

## Description

### Technical Field

The invention relates to additive manufacturing technique, in particular to a forming part with an inclined surface and its forming method.

### Background

As a novel manufacturing technique, additive manufacturing technique has developed rapidly in recent years, and laser melting deposition technique is a kind of additive manufacturing technique with advanced direct energy deposition which is developed based on rapid prototyping, compared with the traditional forging-machining forming technique, comprising the following process characteristics: (1) high utilization rate of material, small amount of machining; (2) fewer procedures in the production process, simple process, high flexibility and the ability of rapid response; (3) molds not required for the forming process, low manufacturing cost, short production cycle, which can greatly satisfy the low-cost manufacturing of metal materials with high melting point, difficulty in processing and high price, and is widely used in the fields of aerospace, automobile, shipping, etc..

Based on the technical principle of discrete-stacking of additive manufacturing, the parts can be stacked layer by layer by adding supports at the inclined position of the structure, and finally the parts can be formed, which limits the further application of additive manufacturing technique on complex parts. The laser melting deposition techniques with coaxial powder/wire feeding such as laser melting deposition are no exception, where the parts are formed by stacking layer by layer. When forming a structure with an inclined surface, a suspending structure without support will be generated after layering and cutting, therefore, for parts with inclined structure, the inclined structure is not supported by powder or solid structure below, if it is formed directly by its own characteristic of layer-by-layer stacking, only a small angle of inclination can be formed, the angle of inclination to the direction of deposition is generally smaller than 30°, if an inclined structure with a larger angle of inclination is desired to be formed, then adding support is required for forming.

For example, an auxiliary support structure suitable for inclined overhanging thin-walled structure is disclosed in the application document of the Chinese patent with publication number CN106475561A, named as 'Auxiliary support structure suitable for inclined overhanging thin-walled structure', where a grid support is adopted between an overhanging end and a forming base plate, a sheet type solid support is adopted on the back of the overhanging thin-walled structure, and the grid support and the solid support are fixedly connected to form an entirety, so that an overhanging part is prevented from buckling deformation, interlayer dislocation and other defects.

However, adding the above supports not only increases the model processing time of adding and designing the supports, the design of solid supports also increases the time cost of the part additive manufacturing forming process. After formation, the supports need to be removed by machining, which results in a significant waste of materials and also increases the time and cost of parts processing.

In the prior art, there have been studies on obtaining forming parts with inclined surfaces by adjusting the forming parameters, for example, the application document of the Chinese patent with publication number CN110696366A, named as 'Surface appearance adjusting and controlling method for additive manufacturing technology formed inclined plane', discloses that the forming parts are subjected to two processes of axial gradient and circumferential gradient, and different parts are configured with different forming process parameters during the forming process, so that the surface topography of the processed parts is basically the same, and the difference in surface roughness of the parts with different angles of inclination is small.

However, there is still a lack of study on the formation of unsupported inclined surface structures by additive manufacturing process with powder feeding/wire feeding in the prior art.

### Summary of invention

One objective of the invention is to provide a method for forming a forming part with an inclined surface, which is a method for forming the part with the inclined surface structure without a supporting structure.

The other objective of the invention is to provide a forming part with an inclined surface, which is formed by the above forming method.

In order to achieve the objective mentioned above, the method for forming the forming part with the inclined surface, used for forming the forming part with the inclined surface, the inclined surface is provided with an angle of inclination, the angle of inclination is an angle between the inclined surface and a forming base plate, the angle is an acute angle;
wherein the forming method comprises:
obtaining a model of the part to be formed, the model is provided with at least one inclined surface;
performing layer separating and slicing process on the model along a direction perpendicular to a deposition direction, forming a plurality of forming layers;
performing scanning path planning on each forming layer, the scanning path after planning comprises an inner filling scanning path and a frame scanning path located on an outer periphery of the inner filling scanning path;
wherein in a plurality of forming layers forming the inclined surface, at least one layer to be formed has a suspended area protruding from a layer already formed and a non-suspended aera, the frame scanning path comprises a first path and a second path, the first path corresponds to the non-suspended area and the second path corresponds to the suspended area;
based on the size of the angle of inclination, setting first process parameters for preparation for the first path, and setting second process parameters for preparation for the second path;
using laser melting deposition technique, printing layer by layer based on the set process parameters for preparation to form the forming part with the inclined surface;
wherein an energy density in the first process parameters for preparation is smaller than an energy density in the second process parameters for preparation.

In one or more embodiment, the method further comprising:
setting third process parameters for preparation for the inner filling scanning path;
wherein an energy density in the third process parameters for preparation is smaller than the energy density in the first process parameters for preparation.

In one or more embodiment, the different energy density is obtained by adjusting laser power and/or scanning rate in the process parameters for preparation.

In one or more embodiment, the first path and the second path are printed continuously during the forming process.

In one or more embodiment, a 90° angle is provided between the inner filling scanning path in two adjacent forming layers.

In one or more embodiment, the scanning path planning further comprising:
planning an extending path of the second path that extends along the first path;
planning a displacement between the second path and the inner filling scanning path;
wherein the second process parameters for preparation are set for the extending path.

In one or more embodiment, the scanning path planning further comprising:
planning an offset displacement of the second path towards the inner filling scanning path.

In one or more embodiment, before performing the layer separating and slicing process on the model, the forming method further comprising:
performing allowance addition processing on the model.

In order to achieve the other objective mentioned above, a forming part with an inclined surface is formed by the above methods for forming the forming part with the inclined surface.

The improvements of the invention comprise at least the followings:
In the forming layers forming the inclined surface of the part, the frame scanning path of the forming layer is separated into the first path and the second path, and a relatively large energy density is used for forming the second path, so that during the forming process of the second path, the powder at this position will be subjected to the relatively large energy density and be melted and deposited to form a larger and thicker molten pool, which compensates the lack of deposition amount caused by the collapse of the molten pool at the position of the inclined structure due to the gravity acting on part of the suspended area close to the boundary, thereby ensuring sufficient deposition amount of the inclined structure and ensuring that the angle of inclination of the inclined surface can be formed effectively.

### Brief descriptions of the drawings

The specific features and performance of the invention are further described with reference to the following embodiments and accompanying drawings.
Figure 1 shows a schematic diagram of an embodiment of the forming part formed by the forming method.
Figure 2 is a schematic flow diagram according to an embodiment of the forming method.
Figure 3 shows a schematic diagram of the forming layer that forms the inclined surface 10 of the part according to an embodiment.
Figure 4 shows a schematic diagram of the forming layer that forms the inclined surface of the part after path planning according to an embodiment.
Figure 5 shows a schematic diagram of the forming layer that forms the inclined surface of the part after path planning according to another embodiment.
Figure 6 shows a diagram of an actual part formed by laser melting deposition according to an embodiment of the method.
Figure 7 is a diagram of an actual part formed by laser melting deposition according to the conventional method.

### Preferred embodiments of the invention

In this disclosure, specific terms are used for describing the embodiments of the invention, such as 'one embodiment', 'an embodiment' and/or 'some embodiments' refers to a certain feature, structure or characteristics related to at least one embodiment of the invention. Therefore, it should be emphasized and noted that 'one embodiment' or 'an embodiment' mentioned two or more times in various places in the description do not necessarily refer to the same embodiment. Furthermore, certain features, structures or characteristics in one or more embodiments of the invention can be combined as appropriate. In addition, the use of terms such as 'first' and 'second' for defining components is only for the convenience of distinguishing the corresponding components, unless otherwise stated, the above terms do not have special meaning, and therefore cannot be considered as limitations on the scope of protection of the invention.

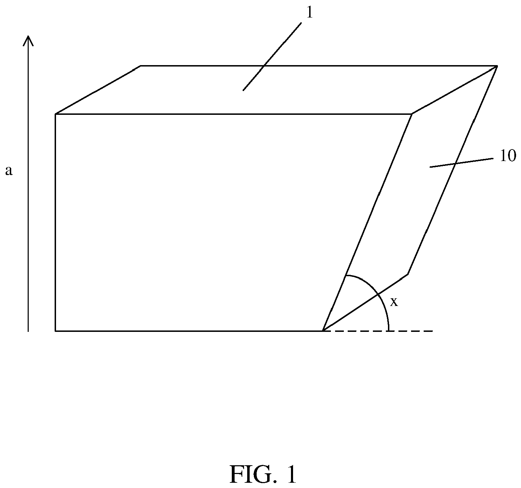

One aspect of one or more of the following embodiments is to provide a forming method, used for forming a forming part with an inclined surface. Figure 1 shows a schematic diagram of an embodiment of the forming part formed by the forming method, the forming part 1 is provided with the inclined surface 10, and the forming part 1 is formed by deposition of additive manufacturing process, with a deposition direction a. In the additive manufacturing forming process, the forming part is generally placed on a surface of a forming base plate, so the deposition direction a of forming is generally perpendicular to the forming base plate.

The inclined surface 10 is a surface which is at an angle x to the forming base plate, wherein the inclined surface 10 can be a flat surface as shown in the figure, or be a curved surface different from the figure. In the schematic diagram of the forming part shown in Figure 1, a bottom surface of the forming part is parallel to the base plate, so the angle x is marked as the angle between the inclined surface 10 and the bottom surface of the forming part.

Wherein the size of the angle x ranges from 0° to 90°, that is, the angle between the inclined surface 10 and forming base plate is an acute angle.

In the process of additive manufacturing, the powder melted by laser energy is represented as liquid droplets that accommodating in a molten pool of a base material, and a body of the forming part will be formed when the molten pool is cooled for solidification. As the angle between the inclined surface 10 and forming base plate is an acute angle, when forming at a frame position of the inclined surface 10 by path scanning, As a partial area of the molten pool that is not solidified completely close to a boundary is in a suspended position, the area will tend to fall and collapse toward the forming base plate due to the action of gravity, resulting in a poor forming quality of the inclined surface due to the collapse of the part of the molten pool close to the boundary between the actual forming part with the inclined surface and the design model. At the meantime, with the decrease in the angle x, there will be more suspended area at the portion close to the boundary of the molten pool, the tendency of collapse due to the action of gravity will be more significant, and the collapse is more likely to occur, thereby further reducing the quality of the forming part. In the prior art, when directly forming the part with the inclined surface, it is difficult to form a part with the angle x of less than 60°, additional auxiliary supports need to be added during the forming process.

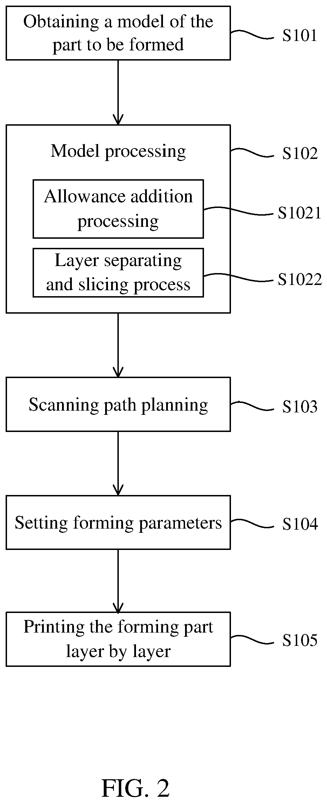

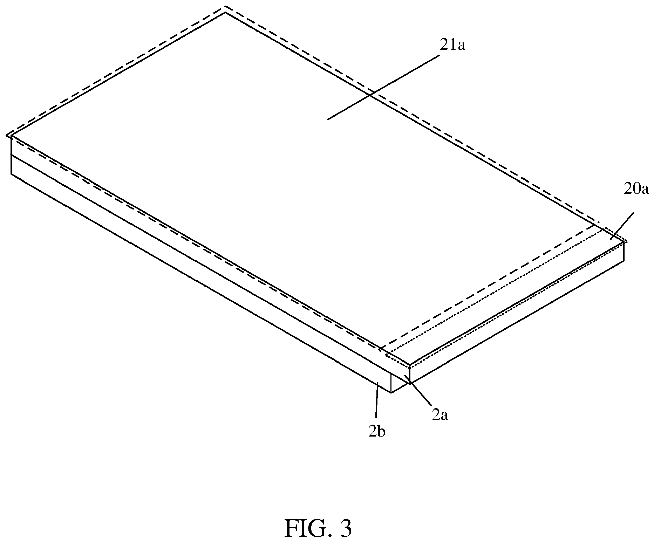

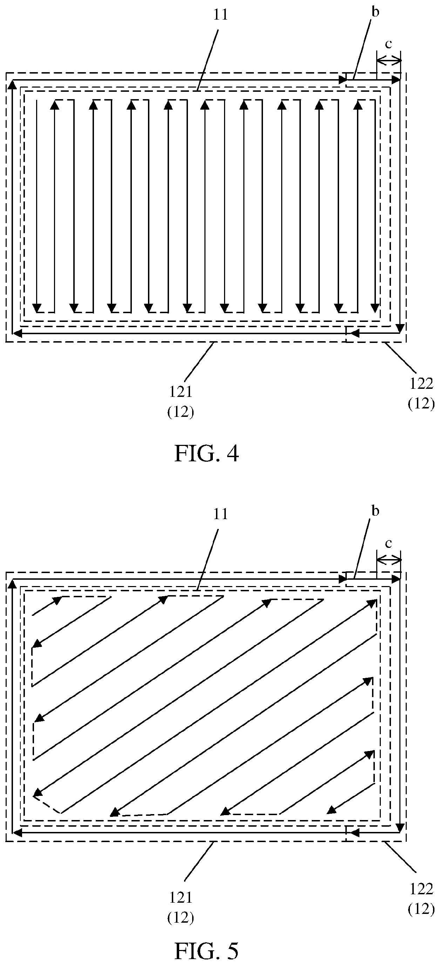

Figure 2 is a schematic flow diagram of an embodiment of the forming method, which can improve the forming quality of the forming part with the inclined surface. The forming method comprises:
Step S 101: Obtaining a model of the part to be formed, the model of the part can be the model of the forming part 1 schematically shown in Figure 1, with one inclined surface 10, or can be a model of a forming part difference from the figure, with two or more inclined surfaces. Specifically, the three-dimensional model of the part with the inclined surface 10 is placed and modeled in a three-dimensional space according to a predetermined forming direction of the part by using a three-dimensional modeling software, where the model processing software can be three-dimensional modeling software such as UG and CAD. When building the model of the forming part by the three-dimensional modeling software, a position and an angle of inclination of the inclined surface of the forming part can be obtained and identified.
Step S 102: model processing, which comprises step S 1022: layer separating and slicing process. Specifically, the model of the part obtained by modelling in the three-dimensional modeling software is placed according to a predetermined forming position, the layer separating and slicing process is performed along a direction perpendicular to the deposition direction, forming a plurality of forming layers, and each forming layer after cutting is perpendicular to the deposition direction a, wherein each forming layer is a layer deposited and stacked during the additive manufacturing process.
Step S103: scanning path planning. Figure 3 shows a schematic diagram of the forming layer that forms the inclined surface 10 of the part according to an embodiment, Figure 4 shows a schematic diagram of the forming layer that forms the inclined surface of the part after path planning according to an embodiment. The scanning path is a moving path of a laser spot during the additive manufacturing process. Specifically, after the layer separating and slicing process of the part model is completed, scanning path planning is performed on each forming layer of the model, each forming layer after planning comprises an inner filling scanning path 11 and a frame scanning path 12 located on the outer periphery of the inner filling scanning path 11. As shown in Figure 3, among a plurality of forming layers forming the inclined surface 10 of the part, at least one layer to be formed 2a has a suspended area 20a protruding from the layer already formed 2b and a non-suspended area 21a as shown in Figure 3. Referring to Figure 3 and Figure 4 in combination, the frame scanning path 12 comprises a first path 121 and a second path 122, and in the frame scanning path 12, the first path 121 corresponds to the non-suspended area 21a and the second path 122 corresponds to the suspended area 20a. It can be understood that the frame scanning path 12 is the forming path for forming an outer contour of a product, and the inner filling scanning path 11 is the forming path of the product after removing the frame scanning path 12.

Figure 4 schematically shows the relationship of relative position between the inner filling scanning path 11, the first path 121 and the second path 122 of the frame scanning path 12, which is not intended to limit the specific scope.

The relationship of relative position between the inner filling scanning path 11 and the frame scanning path 12 are further described in the following content. Referring to Figure 3 and Figure 4 in combination, when a radius of the laser spot formed along the second path 122 is smaller than a width of the suspended area 20a during the forming process, only the part of frame scanning path 12 in the suspended area 20a is included in the second path 122, while the corresponding part of inner filling scanning path 11 in the suspended area 20a is not included, in this embodiment, a relatively small angle of inclination x of the part can be formed for the same spot size. When the radius of the laser spot formed along the second path 122 is larger than a width of an area that is suspended and protruding from the layer already formed, at least part of the forming area of the second path 122 is the suspended area 20a, and a part overlaps with the laser spot along the scanning path 11 during forming, in this embodiment, a relatively large angle of inclination x of the part can be formed for the same spot size.

Step S104: setting forming parameters. Specifically, based on the size of the angle of inclination x of the part to be formed, first process parameters for preparation are set for the first path 121, and second process parameters for preparation are set for the second path 122, wherein the energy density in the first process parameters for preparation is smaller than the energy density in the second process parameters for preparation.

The process parameters for preparation comprise one or more parameters of laser power, scanning rate, powder feeding rate, spot diameter, scanning spacing and layer thickness. In an embodiment, the process parameters for preparation of the angle of inclination of the forming part is obtained by adjusting one or more parameters of the process parameters for preparation, comparing a variation relationship between a forming specimen and the parameters and the trial and error method. In another embodiment, a relationship between the angle of inclination of the part and the adjustment of one or more parameters of the process parameters for preparation can also be obtained by summarizing, so the process parameters for preparation of the angle of inclination of the forming part is obtained.

Step S 105: printing the forming part layer by layer. Specifically, printing is performed layer by layer based on the set process parameters for preparation, so the forming part 1 with the inclined surface 10 is formed as shown in Figure 1, wherein the laser melting deposition technique in the powder/wire feeding technique is adopted by the forming method for forming, compared with the additive manufacturing process where the molten power bed is supported by powder, when forming with the laser melting deposition technique, collapse is more likely to occur as there is no support such as powder under the suspended area of the forming part. Provided with the present forming method, when forming with the laser melting deposition technique, the occurrence of collapse during the forming process can be reduced, improving the forming accuracy of the angle of inclination, thereby improving the forming quality.

In the forming layers forming the inclined surface of the part, the frame scanning path 12 of the forming layer is separated into the first path 121 and the second path 122, and a relatively large energy density is used for forming the second path 122, so that during the forming process of the second path 122, the powder at this position will be subjected to the relatively large energy density and be melted and deposited to form a larger and thicker molten pool, which compensates the lack of deposition amount caused by the collapse of the molten pool at the position of the inclined structure due to the gravity acting on part of the suspended area close to the boundary, thereby ensuring sufficient deposition amount of the inclined structure and ensuring that the angle of inclination of the inclined surface can be formed effectively.

In an embodiment of the forming method, setting forming parameters further comprises:
setting third process parameters for preparation for the inner filling scanning path 11,
wherein the energy density in the third process parameters for preparation is smaller than the energy density in the first process parameters for preparation.

In summary, in the present forming method, the energy density in the third process parameters for preparation < the energy density in the first process parameters for preparation < the energy density in the second process parameters for preparation, that is, a relatively large energy density is used for forming the second path 122.

In an embodiment of the forming method, different energy density is obtained by adjusting the laser power and/or the scanning rate in the process parameters for preparation. Specifically, in an embodiment, different energy density is obtained by adjusting the scanning rate, in which case the scanning rate in the second process parameters for preparation < the scanning rate in the first process parameters for preparation < the scanning rate in the third process parameters for preparation. In another embodiment, different energy density is obtained by adjusting the laser power, in which case the laser power in the third process parameters for preparation < the laser power in the first process parameters for preparation < the laser power in the second process parameters for preparation.

As shown in Figure 2, in an embodiment of the forming method, the first path 121 and the second path 122 are printed continuously during the forming process, that is, the first path 121 and the second path 122 are printed continuously, only the forming parameters are set to be different during the forming process, ensuring the continuity of the formation of the frame.

In an embodiment of the forming method, during the forming process, a 90° angle can be provided between the two adjacent layers of the inner filling scanning path 11 for reducing stress concentration during the forming process.

Figure 5 shows a schematic diagram of the forming layer that forms the inclined surface of the part after path planning according to another embodiment, in this embodiment, an angle is provided between the forming path of the inner filling scanning path 11 and the forming path of the frame scanning path 12.

In an embodiment of the forming method, scanning path planning further comprises:
setting an extending path b that extends along the first path 121 of the frame 12 in the second path 122. The first path 121 is continued to the second path 122 but not overlapped, as an angle is generally provided between the first path 121 and the second path 122, direct forming will result in the collapse of the molten pool at a position of intersection of the two paths during the forming process. By planning the extending path b, sufficient forming layer thickness can be ensured at the position of intersection of the first path 121 and the second path 122, improving the ability of forming at the position of intersection of the first path 121 and the second path 122, wherein the same second process parameters for preparation as that for the second path 122 is used for forming the extending path b. The extending path b is generally determined based on the size of the spot diameter of laser, preferably to have the size of 0.5 to 1 spot diameter.

Wherein the size of the spot diameter is relative to the laser power and the size of powder spot diameter in the forming parameters, specifically, the spot diameter is basically consistent with the powder spot diameter, for a relatively small laser power such as smaller than 1000W, the laser spot diameter and the powder spot diameter are generally relatively small such as about 0.5 mm; for a relatively large laser power such as larger than 2500W, the laser spot diameter and the powder spot diameter are generally relatively large such as about 5 mm.

Setting a displacement c between the second path 122 and the inner filling scanning path 11. It can be further ensured by planning the displacement c that the molten pool of the second path 122 and the molten pool of the inner filling scanning path 11 can be overlapped effectively during the forming process, forming a compact structure, ensuring the ability of forming at the position close to the boundary of the part and the forming quality of metallurgical bonding, wherein the displacement c is relative to the spot diameter for forming, for a relatively large spot diameter such as larger than or equal to 5 mm, the displacement c is generally determined to be 0.8-2.5 mm; for a relatively small spot diameter such as smaller than or equal to 1 mm, the displacement c is generally determined to be 0.4-0.6 mm.

In an embodiment of the forming method, scanning path planning further comprises setting an offset displacement of the second path 122 towards the inner filling scanning path 11. The scanning path of the second path 122 is offset inward by a certain distance, which can reduce the inclined suspended part of the molten pool effectively and reduce the collapse during the forming process, so that the molten pool can be deposited and solidified more at the position of the inclined structure, ensuring the formation of the angle of inclination, wherein for the forming part with a relatively small angle of inclination x, the offset displacement is relatively large; for the forming part with a relatively large angle of inclination x, the offset displacement is relatively small. For example, for the forming part with an angle of inclination larger than 60°, preferably, the offset displacement is 0-0.1 mm; for the forming part with an angle of inclination smaller than 60°, preferably, the offset displacement is 0.1-1.5 mm.

In an embodiment of the forming method, the step S102: model processing further comprises step S 1021: performing allowance addition processing on the model. The allowance addition processing refers to adding printing allowance to the contour of the part, so that a sufficient size allowance is provided for post processing such as machining or surface treatment after the part has been formed, ensuring the final dimensional accuracy of the part.

In an embodiment of the forming method, different powder feeders and laser cladding heads can be used for the inner filling scanning path 11 and the frame scanning path 12, and the printing method can be printing the frame scanning path 12 and the inner filling scanning path 11 successively or concurrently in each single layer.

On the other aspect, a forming part with an inclined surface is provided, which is formed by one or more forming methods mentioned above.

The following will be further description with reference to two specific embodiments:

### The first embodiment:

A part with an angle of inclination of 70° is placed in the three-dimensional model processing software according to the predetermined forming position to identify the inclined surface, and the angle of inclination between the inclined surface and the base plate is 70°.

The allowance addition processing is performed on the part, where each side of the frame is added by an allowance of a half spot. The layer separating and slicing process is performed on the part by a two-dimensional cutting software, the corresponding sides of the inclined surface in a two-dimensional cutting layer are identified, area partition and forming path planning are performed in each layer. A schematic diagram of the forming layer after area partition and forming path planning is shown in Figure 4.

The third process parameters for preparation for the inner filling are set, comprising: laser power P=2800W, scanning rate of the inner filling of 1000 mm/min, powder feeding rate of 20-22 g/min, spot diameter of 5 mm, layer thickness of 0.8 mm.

The first process parameters for preparation for the first path are set, comprising: laser power P=2800W, scanning rate of the inner frame of 800 mm/min, powder feeding rate of 20-22 g/min, spot diameter of 5 mm, layer thickness of 0.8 mm.

The second process parameters for preparation for the second path are set, comprising: laser power P=2800W, scanning rate of the outer frame of 67.5 % ^{∗}800=540 mm/min, powder feeding rate of 20-22 g/min, spot diameter of 5 mm, layer thickness of 0.8 mm.

Extending path b=3 mm, displacement c=0.8 mm are set.

The forming of the current layer is completed according to a planned forming strategy and process parameters, after the layer is formed, the next layer is inner filled by rotating 90° counterclockwise, without changing a laser scanning strategy of the scanning path of the first path 121 and the second path 122 in the frame 12, and keep repeating until the formation of the angle of inclination of the part is completed.

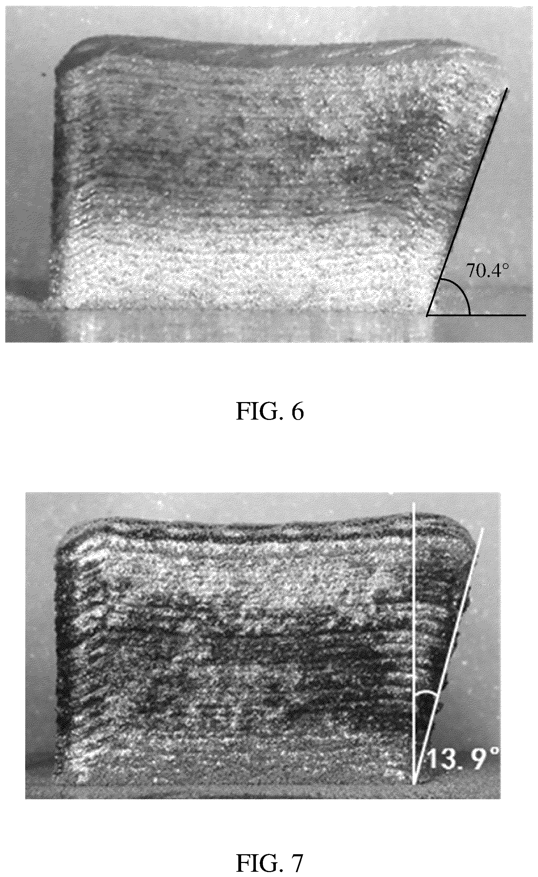

Figure 6 shows a diagram of an actual part formed by laser melting deposition according to the method mentioned above, Figure 7 is a diagram of an actual part formed by laser melting deposition according to the conventional method, wherein the angle x of the forming part in Figure 6 is measured to be 70.4°, and the angle x' of the forming part in Figure 7 is measured to be 76.1°. A forming error of the part formed by the present method is 0.57%, while the forming error the part formed by the conventional method is 8.71%. In contrast, the forming error of the angle of inclination of the part formed by the present method is reduced significantly, which improves the quality of the forming part.

### The second embodiment:

A part with an angle of inclination of 45° is placed in the three-dimensional model processing software according to the predetermined forming position to identify the inclined surface, and the angle of inclination between the inclined surface and the base plate is 45°.

The allowance addition processing is performed on the part, where each side of the frame is added by an allowance of a half spot. The layer separating and slicing process is performed on the part by a two-dimensional cutting software, the corresponding sides of the inclined surface in a two-dimensional cutting layer are identified, area partition and forming path planning are performed in each layer. A schematic diagram of the forming layer after area partition and forming path planning is shown in Figure 5.

The third process parameters for preparation for the inner filling are set, comprising: laser power P=2800W, scanning rate of the inner filling of 1000 mm/min, powder feeding rate of 20-22 g/min, spot diameter of 5 mm, layer thickness of 0.8 mm.

The first process parameters for preparation for the first path are set, comprising: laser power P=2800W, scanning rate of the inner frame of 800 mm/min, powder feeding rate of 20-22 g/min, spot diameter of 5 mm, layer thickness of 0.8 mm.

The second process parameters for preparation for the second path are set, comprising: laser power P=2800W, scanning rate of the outer frame of 50% *800 =400 mm/min, powder feeding rate of 20-22 g/min, spot diameter of 5 mm, layer thickness of 0.8 mm.

Extending path b=3 mm, displacement c=0.8 mm are set, the scanning path of the second path 122 is set to be offset inwards by 0.1 mm.

The forming of the current layer is completed according to a planned forming strategy and process parameters, after the layer is formed, the next layer is inner filled by rotating 90° counterclockwise, without changing a laser scanning strategy of the scanning path of the first path 121 and the second path 122 in the frame 12, and keep repeating until the formation of the angle of inclination of the part is completed.

An actual forming angle of the part formed by the present method is 48°, with a forming error of 6.7%, while a part with an angle of inclination smaller than 60° cannot be formed by the conventional forming technique.

Although the present invention is disclosed above with the preferred embodiments, it is not intended to limit the invention, and any person skilled in the art can make possible changes and modifications without departing from the spirit and scope of the invention. Therefore, any modifications, equivalent changes and alternatives made to the above embodiments according to the technical essence of the invention without departing from the content of the technical solutions of the invention shall all fall within the scope of protection defined by the claims of the invention.

## Claims

1. A method for forming a forming part with an inclined surface, used for forming the forming part with the inclined surface, the inclined surface is provided with an angle of inclination, the angle of inclination is an angle between the inclined surface and a forming base plate, the angle is an acute angle,
wherein the forming method comprises:
obtaining a model of the part to be formed, the model is provided with at least one inclined surface;
performing layer separating and slicing process on the model along a direction perpendicular to a deposition direction, forming a plurality of forming layers;
performing scanning path planning on each forming layer, the scanning path after planning comprises an inner filling scanning path and a frame scanning path located on an outer periphery of the inner filling scanning path;
wherein in a plurality of forming layers forming the inclined surface, at least one layer to be formed has a suspended area protruding from a layer already formed and a non-suspended aera, the frame scanning path comprises a first path and a second path, the first path corresponds to the non-suspended area and the second path corresponds to the suspended area;
based on the size of the angle of inclination, setting first process parameters for preparation for the first path, and setting second process parameters for preparation for the second path;
using laser melting deposition technique, printing layer by layer based on the set process parameters for preparation to form the forming part with the inclined surface;
wherein an energy density in the first process parameters for preparation is smaller than an energy density in the second process parameters for preparation.

2. The method for forming the forming part with the inclined surface according to claim 1, wherein further comprising:
setting third process parameters for preparation for the inner filling scanning path;
wherein an energy density in the third process parameters for preparation is smaller than the energy density in the first process parameters for preparation.

3. The method for forming the forming part with the inclined surface according to claim 2, wherein the different energy density is obtained by adjusting laser power and/or scanning rate in the process parameters for preparation.

4. The method for forming the forming part with the inclined surface according to claim 1, wherein:
the first path and the second path are printed continuously during the forming process.

5. The method for forming the forming part with the inclined surface according to claim 1, wherein:
a 90° angle is provided between the inner filling scanning path in two adjacent forming layers.

6. The method for forming the forming part with the inclined surface according to claim 1, wherein the scanning path planning further comprising:
planning an extending path of the second path that extends along the first path;
planning a displacement between the second path and the inner filling scanning path;
wherein the second process parameters for preparation are set for the extending path.

7. The method for forming the forming part with the inclined surface according to claim 1, wherein the scanning path planning further comprising:
planning an offset displacement of the second path towards the inner filling scanning path.

8. The method for forming the forming part with the inclined surface according to claim 1, wherein before performing the layer separating and slicing process on the model, the forming method further comprising:
performing allowance addition processing on the model.

9. A forming part with an inclined surface, wherein the forming part is formed by any one of the methods for forming the forming part with the inclined surface according to claim 1-8.
